# EUROPEAN PATENT APPLICATION

(11) **EP 1 360 892 A1**
(43) Date of publication of application: **12.11.2003**
(21) Application number: 02010369.3
(22) Date of filing: 07.05.2002
(51) Int. Cl.: A01G 1/06

(54) **Holding apparatus for a rod-like grafting member**

(71) Applicant: Takii Shubyo Kabushiki Kaisha, Shimogyo-ku, Kyoto (JP); Dai-Ichi Ceramo Ltd., Kanzaki-gun, Shiga (JP)
(72) Inventor: Kakinuma, Momoru, Hiratsuka-shi, Kanagawa (JP); Masuda, Koji, Koga-gun, Shiga (JP); Kinoshita, Hiromitsu, Mishima-gun, Osaka (JP)
(74) Representative: Strehl Schübel-Hopf & Partner

(57) **Abstract**

There is provided a holding apparatus (1) for a rod-like grafting member (2) for easily taking out the rod-like member from a containing apparatus and piercing the rod-like member into a rootstock. The holding apparatus is constituted by two elastic pieces (1A), interconnected at their rear portions, holding portions (1B) formed at front portions of the elastic pieces (1A) and means (3) for adjusting a separation distance of the holding portions.

## Description

### Technical Field of the Invention

The present invention relates to a holding apparatus of a rod-like member for grafting for bonding a rootstock and a scion with regard to greens and fruits of tomato, eggplant, melon and the like.

### Prior Art

In a conventional holding apparatus, as described in Japanese Patent Laid-Open No. 255276/1995, a rod-like member is inserted through a chuck by opening the chuck and dropped into a hole of a jig disposed at a front portion of a supply apparatus and substantially a half of the rod-like member is projected from a front end hole.

Therefore, the rod-like member needs to freely drop at inside of the front end hole of the supply apparatus, however, a sap enters from the front end hole by the capillary action and by the surface tension of the sap and by drying and solidifying of the sap, the rod-like member is hampered from being dropped.

Hence, the applicant has developed a rod-like member containing apparatus for containing a plurality of rod-like members for grafting by piercing the rod-like members for grafting to a containing member comprising foamed resin.

However, according to the above-described rod-like member containing apparatus, a holding apparatus of the rod-like member is indispensable for easily taking out the rod-like member from the containing apparatus and piercing the rod-like member to a rootstock.

In view of the above-mentioned situation, the present invention provides a holding apparatus of a rod-like member for grafting for bonding a rootstock and a scion.

### Summary of the Invention

According to the invention, in a holding apparatus of a rod-like member for grafting used as a support piece in grafting a rootstock and a scion, the holding apparatus is constituted by two elastic pieces rear portions of which are connected, holding portions are formed at front portions of the elastic pieces and means for adjusting a separation dimension of the holding portions is provided.

### Brief Description of the Drawings

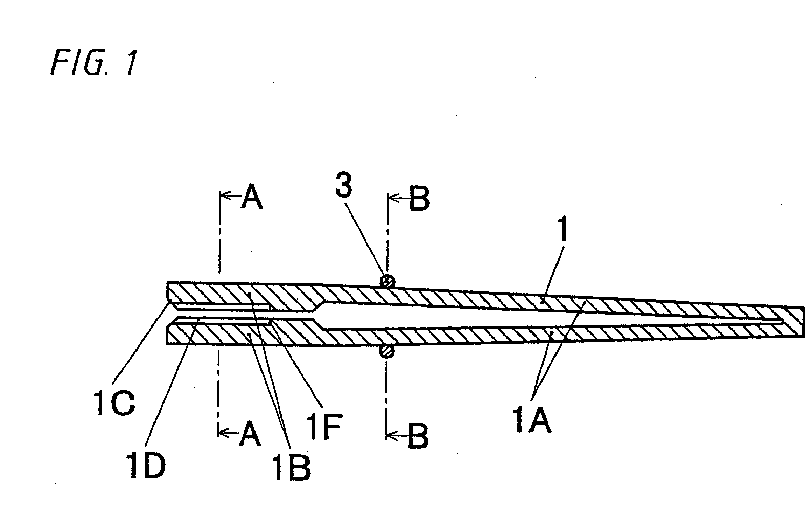

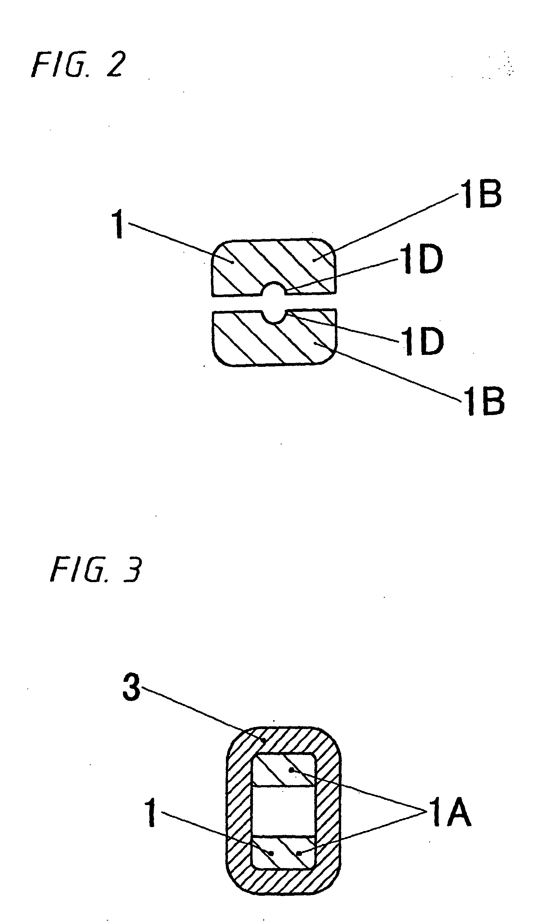

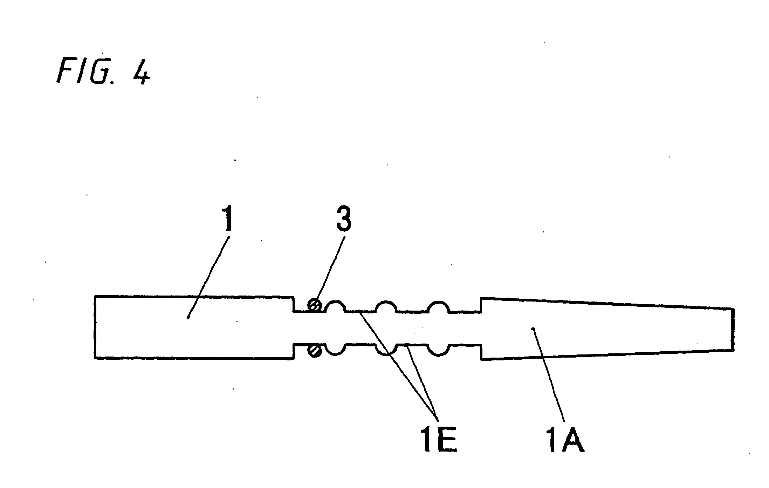

Fig. 1 is a sectional view showing a first embodiment of a holding apparatus of a rod-like member for grafting according to the invention. Fig. 2 is an enlarged sectional view taken along a line A-A of Fig. 1. Fig. 3 is an enlarged sectional view taken along a line B-B of Fig. 1. Fig. 4 is a plane view of the apparatus shown in Fig. 1.

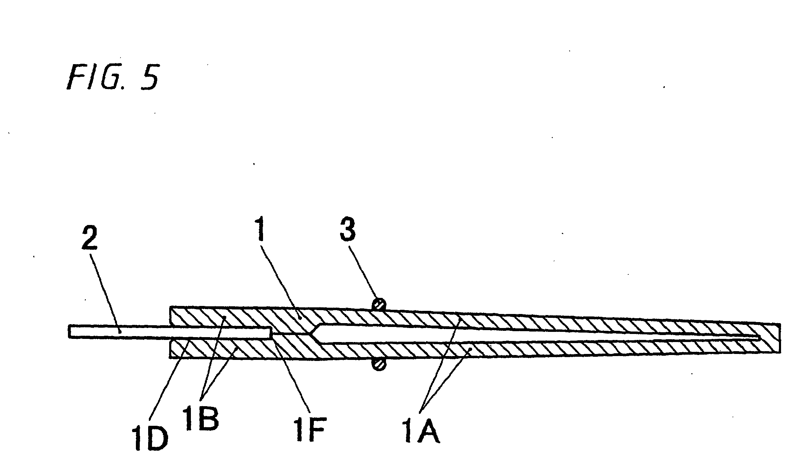

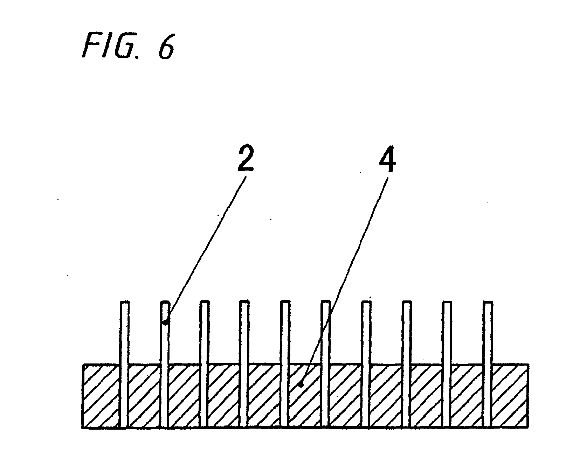

Fig. 5 is a sectional view showing a state of holding a rod-like member according to the first embodiment of the invention. Fig. 6 is a sectional view showing a state of piercing and containing the rod-like member to a containing member.

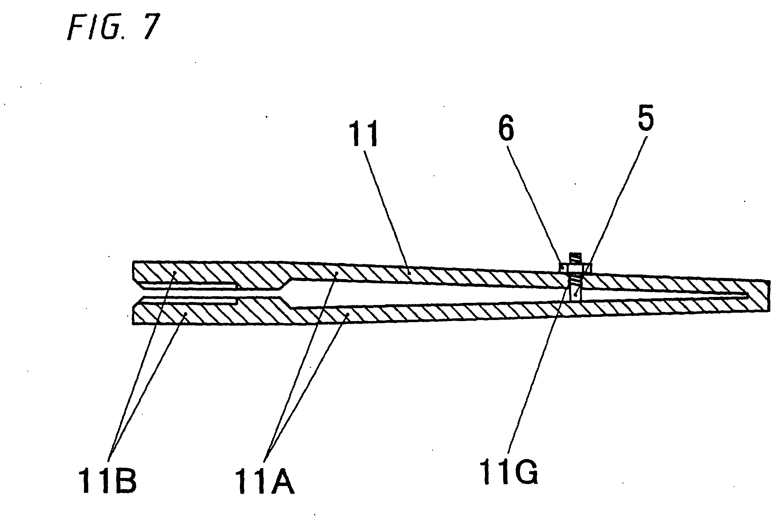

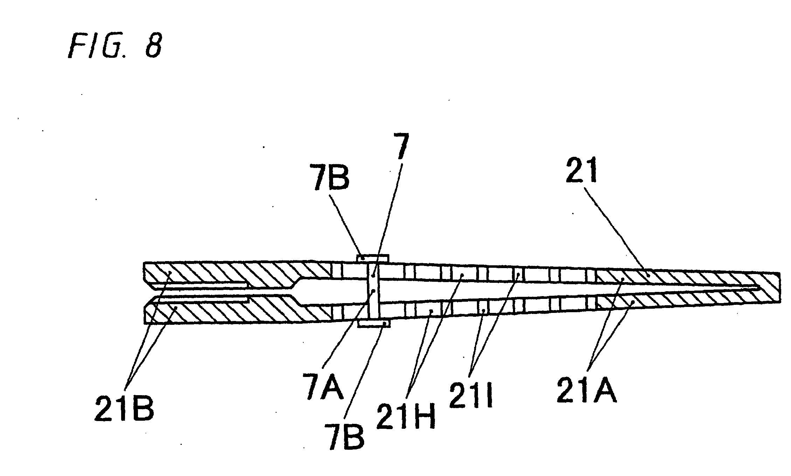

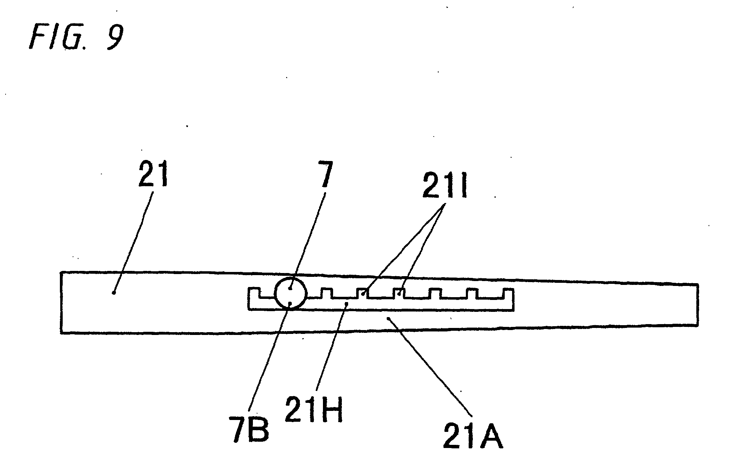

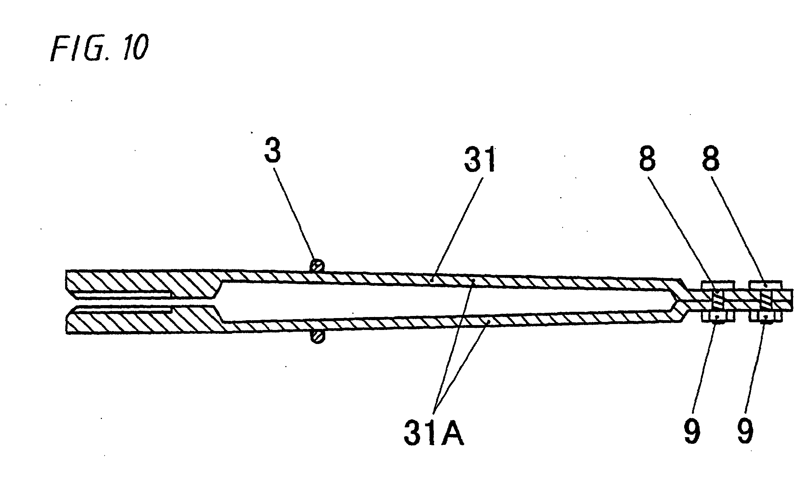

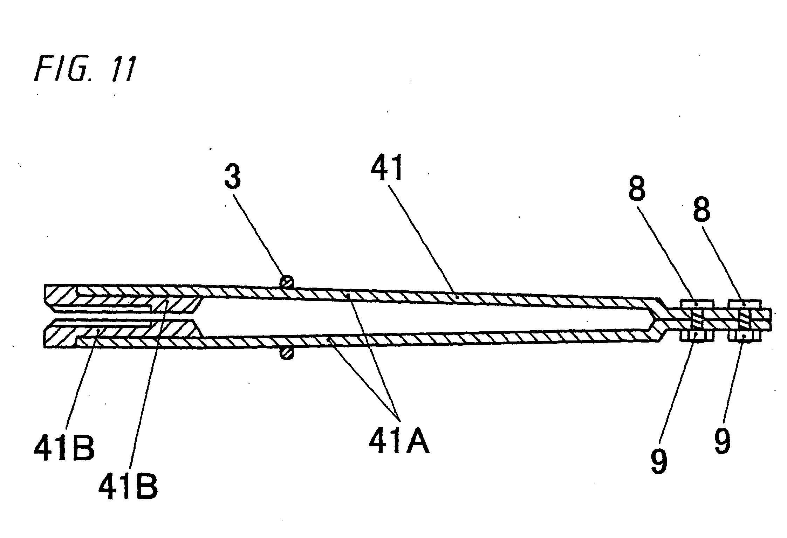

Fig. 7 is a sectional view showing a second embodiment of the invention. Fig. 8 is a sectional view showing a third embodiment of the invention. Fig. 9 is a plane view of the apparatus shown in Fig. 8. Fig. 10 is a sectional view showing a fourth embodiment of the invention. Fig. 11 is a sectional view showing a fifth embodiment of the invention.

Reference numerals and signs in the figures designate following objects respectively;

1: holding apparatus, 1A: elastic piece of holding apparatus 1, 1B: holding portion of holding apparatus 1, 1E: recessed portion of holding apparatus 1, 2: rod-like member, 3: O ring, 5: male screw member, 6: nut, 7: sliding member, 7A: rod-like portion of sliding member 7, 7B: press contact portion of sliding member 7, 11: holding apparatus, 11A: elastic piece of holding apparatus 11, 11B: holding portion of holding apparatus 11, 11G: hole of holding apparatus 11, 21: holding apparatus, 21A: elastic piece of holding apparatus 21, 21B: holding portion of holding apparatus 21, 31: holding apparatus, 31A: elastic piece of holding apparatus 31, 41: holding apparatus, 41A: elastic piece of holding apparatus 41, 41B: holding portion of holding apparatus 41.

### Embodiments of the Invention

A detailed explanation will be given of embodiments of the invention in reference to the drawings as follows. However, the invention is not limited thereto.

Fig. 1, Fig. 2, Fig. 3 and Fig. 4 show a first embodiment of a holding apparatus of a rod-like member for grafting according to the invention and a front side thereof is constituted by a left side of Fig. 1 and a rear side thereof is constituted by a right side of Fig. 1. First, rear portions of two elastic pieces 1A made of metal or synthetic resin are integrally connected to thereby constitute a holding apparatus 1 of a tweezers type.

A front portion of the elastic piece 1A is formed with a holding portion 1B, a front end of the holding portion 1B is formed with a taper portion 1C narrowed toward a rear side in a longitudinal direction and a recessed groove 1D is formed to extend from the taper portion 1C to the rear side in the longitudinal direction. Further, a distance from the front end of the holding portion 1B to a rear end of the recessed groove 1D, is set to substantially a half of a distance of a total length of a rod-like member 2, mentioned later. Further, in a state of putting together the holding portions 1B, an inner diameter of a sectional shape of the recessed groove 1D is set to be substantially the same as, or slightly slenderer than, a maximum diameter of the rod-like member 2 and the rod-like member 2 is held by the recessed grooves 1D as shown by Fig. 5.

Further, a plurality of recessed portions 1E are constituted at equal intervals in the longitudinal direction to be opposed to both sides of the two elastic pieces 1A. An O ring 3 made of rubber is outwardly fitted to the two elastic pieces 1A and the O ring 3 is disposed at the recessed portion 1E. Therefore, expansion of the elastic pieces 1A is restricted by the O ring 3 and a separation distance of the holding portions 1B opposed to each other is restricted. The separation distance of the holding portions 1B can be adjusted by changing the expansion of the elastic pieces 1A by moving the O ring 3 outwardly fitted to the recessed portions 1E of the elastic pieces 1A in the longitudinal direction and outwardly fitting the O ring 3 to arbitrary ones of the recessed portions 1E.

Explaining operation of grafting by using the holding apparatus 1 of the first embodiment explained above, first, the holding portions 1B of the holding apparatus 1 are covered on the rod-like member 2 pierced to a containing member 4 made of foamed resin as shown by Fig. 6. At this occasion, when the separation dimension of holding portions 1B is adjusted to be smaller than an outer diameter of the rod-like member 2, there is not a concern of holding the rod-like member 2 to be inclined to deviate from the recessed grooves 1D or holding the rod-like member 2 at a position deviated from the recessed grooves 1D but the rod-like member 2 is firmly inserted into the recessed grooves 1D. When the rod-like member 2 is inserted into the recessed grooves 1D, the holding portions 1B are closed to hold the rod-like member 2 by bending the two elastic pieces 1A to inner sides by hand. At this occasion, when the rod-like member 2 is held by locking an end face of the rod-like member 2 by locking faces 1F of the holding portions 1B, the rod-like member 2 is held in a state that substantially a half of it is projected from the front end of the holding apparatus 1.

When the holding apparatus 1 is separated from the containing member 4 under the state, the rod-like member 2 can be detached from the containing member 4.

Next, when the rod-like member 2 held by the holding apparatus 1 is thrusted to a bonding end of a rootstock to thereby bring the front end of the holding apparatus 1 into contact with the bonding end, the half of the rod-like member 2 is thrusted to the rootstock.

Further, the elastic pieces 1A are expanded and the holding apparatus 1 is detached from the rod-like member 2. Further, when an end of the rootstock is held by the hand and a bonding end of a scion is thrusted to the rod-like member 2 projected from the rootstock, operation of grafting is finished.

Incidentally, even when the operation of grafting is carried out by reversing the rootstock and the scion, firstly thrusting the half of the rod-like member 2 to the scion and thereafter thrusting the rod-like member 2 to the rootstock, naturally, there is not posed any problem.

Further, as an example, the rod-like member 2 was constituted by ceramic and was formed in a hexagonal sectional shape having a total length of about 15mm and a maximum diameter of about 0.53mm.

Fig. 7 shows a second embodiment of a holding apparatus of a rod-like member for grafting according to the invention and a holding apparatus 11 of a tweezers type is constituted by integrally connecting rear portions of two elastic pieces 11A. An end portion of a male screw member 5 is fixedly attached to an inner face of one of the elastic pieces 11A by welding or adhering, a hole 11G is formed at other of the elastic pieces 11A and the male screw member 5 is penetrated to the hole 11G. Further, a nut 6 is screwed to the male screw member 5 and the nut 6 is brought into press contact with the elastic piece 11A to thereby restrict expansion of the elastic pieces 11A.

In order to adjust a separation dimension of holding portions 11B, in this embodiment, the separation dimension is adjusted by adjusting the expansion of the elastic pieces 11A by regularly rotating or reversely rotating the nut 6.

Fig. 8 and Fig. 9 show a third embodiment of a holding apparatus of a rod-like member for grafting according to the invention and a holding apparatus 21 of a tweezers type is constituted by integrally connecting rear portions of two elastic pieces 21A. Respectives of the elastic pieces 21A are formed with through grooves comprising sliding grooves 21H extended in a longitudinal direction and locking grooves 21I extended from the sliding grooves 21H in side directions to be opposed to each other. By making a rod-like portion 7A of a sliding member 7 penetrate the through grooves and locking the rod-like portion 7A at the locking grooves 21I, press contact portions 7B in a shape of a nail head formed at the both sides of the rod-like portion 7A, are brought into press contact with the elastic pieces 21A to thereby restrict expansion of the elastic pieces 21A.

In order to adjust a separation dimension of holding portions 21B, in this embodiment, the separation dimension is adjusted by adjusting expansion of the elastic pieces 21A by moving the rod-like portion 7A of the sliding member 7 in the longitudinal direction along the sliding grooves 21H and locking the rod-like portion 7A at arbitrary ones of the locking grooves 21I.

Further, although according to any of the above-described embodiments, the two elastic pieces are connected and integrally constituted at the rear portion, the invention is not limited to the above-described embodiments but as in a fourth embodiment shown in Fig. 10, a holding apparatus 31 can also be constituted by separately constituting two elastic pieces 31A and fixing rear portions of the elastic pieces 31A by bolts 8 and nuts 9. Further, as in a fifth embodiment shown in Fig. 11, a holding apparatus 41 can also be constituted by fixedly attaching holding portions 41B made of a synthetic resin to front portions of elastic pieces 41A made of a metal by adhering or the like and fixing rear portions of the elastic pieces 41A by the bolts 8 and the nuts 9.

Furthermore, according to the holding apparatus of the invention, it is not necessarily needed to set the distance from the front portion of the holding portion to the rear end of the recessed groove to substantially the half of the total length of the rod-like member but the recessed groove may be formed from the front end to the rear end of the holding portion in the holding apparatus, though not illustrated. In this case, when substantially a half of a total length of a rod-like member is contained to pierce to a containing member and a portion projected from the containing member is held by a holding portion, the rod-like member is held in a state of projecting by substantially the half of the rod-like member from a front end of the holding portion.

As explained above, the holding apparatus of the rod-like member for grafting for bonding a rootstock and scion according to the invention makes it possible to hold the rod-like member by a simple operation, namely by bending the two elastic pieces.

Furthermore, the separation dimension of the holding portions of the holding apparatus can arbitrarily adjusted and therefore, there is achieved an effect of firmly holding the rod-like member by the recessed grooves of the holding portions and remarkably promoting operability.

## Claims

1. A holding apparatus (1, 11, 21, 31, 41) for a rod-like grafting member (2) used as a support piece in grafting a rootstock and a scion, **characterised by** two elastic pieces (1A, 11A, 21A, 31A, 41A) interconnected at their rear portions, holding portions (1B, 11B, 21B, 41B) formed at front portions of the elastic pieces (1A, 11A, 21A, 31A, 41A) and means (3, 1E, 5, 6, 7, 21H) for adjusting a separation distance of the holding portions (1B, 11B, 21B, 41B).

2. The holding apparatus of claim 1, wherein an O ring (3) surrounds the two elastic pieces to adjust the separation distance by movement of the O ring (3) in the longitudinal direction of the elastic pieces (1A, 11A, 31A, 41A).

3. The holding apparatus (1) of claim 2, wherein a plurality of recessed portions (1E) are provided at equal intervals in the longitudinal direction on opposing sides of the two elastic pieces (1A, 11A, 31A, 41A) and the O ring (3) is outwardly fitted onto the recessed portions (1E).

4. The holding apparatus (11) according to claim 1, wherein an end portion of a male screw member (5) is fixed to an inner face of one of the elastic pieces (11A), the opposite end portion extends through a hole formed in the opposite elastic piece (1A), a nut screwed onto the male screw member (5) restricts the expansion of the elastic pieces, and the separation distance of the holding portions (11B) is adjustable by rotation of nut.

5. The holding apparatus according to claim 1, wherein through grooves (21H) are provided on opposite positions in the elastic pieces (21A), a rod-like portion (7A) of a sliding member (7) penetrates the through grooves (21H), expansion of the elastic pieces is restricted by press contact portions (7B) formed on both ends of the rod-like portion (7A), and the separation distance of the holding portions (21B) is adjustable by movement of the sliding member (7) in the longitudinal direction of the elastic pieces (21A).
